Europäisches Patentamt

(19) European Patent Office

Office européen des brevets

(11) Publication number: **0 112 468**
**B1**

(12) **EUROPEAN PATENT SPECIFICATION**

(45) Date of publication of patent specification: **15.10.86**

(21) Application number: **83110961.6**

(22) Date of filing: **03.11.83**

(51) Int. Cl.⁴: **B 23 K 1/00, B 23 K 3/00**

(54) Desoldering apparatus and method.

(30) Priority: **17.12.82 US 450170**

(43) Date of publication of application:
**04.07.84 Bulletin 84/27**

(45) Publication of the grant of the patent:
**15.10.86 Bulletin 86/42**

(84) Designated Contracting States:
**DE FR GB**

(56) References cited:
**DE-A-2 908 477**
**US-A-3 045 095**
**US-A-3 406 274**

**IBM TECHNICAL DISCLOSURE BULLETIN, vol.
25, no. 2, July 1982, New York M.D. DINARDO
et al. "Removal of broken and undamaged
(signal) bifurcated spring connectors from
printed circuit boards"**

(73) Proprietor: **International Business Machines
Corporation
Old Orchard Road
Armonk, N.Y. 10504 (US)**

(72) Inventor: **Slack, John Robert
Rd. No. 2, Knight Rd. Box 387
Vestal, N.Y. 13850 (US)**
Inventor: **von Voss, William Ditlef
9405 Cedar Forest
Austin, TX 78750 (US)**

(74) Representative: **Neuland, Johannes, Dipl.-Ing.
Schönaicher Strasse 220
D-7030 Böblingen (DE)**

## Description

This invention relates generally to desoldering apparatus and method and, more particularly, to such apparatus and method employing a fluid pressure differential along a softened solder column.

Individual pin or wire connectors soldered into through holes in semiconductor circuit substrates or panels frequently must be replaced because of damage or circuit changes. The connectors and through holes are usually located on close center-to-center distances to achieve the required packaging density. Therefore, when selective connector replacement is undertaken, small tools and slow, careful extraction effort are necessary.

Such a tool is described in an article of M. D. Dinardo et al "Removal of broken and undamaged (signal) bifurcated spring connectors from printed circuit boards" in the IBM Technical Disclosure Bulletin, Vol. 25, No. 2, July 1982, pp. 551 and 552.

The tool comprises a thin wire push probe which is mounted in a copper heat sink shield fastened to insulated support rods. As heat source a gas fueled jeweler's torch is used that extends between the rods and heats the copper heat sink block which in turn conducts the heat to the wire push probe. The hot push probe melts the solder in the through hole and pushes out the bifurcated spring connector.

A heated solder sucker removes the solder and connector to leave a clear see-through hole.

In the past, the solder of a selected connector has been usually softened and melted with a fine jet of heated gas such as nitrogen. The gas, being under pressure, also flows over a surrounding area with sufficient heat to soften the solder of neighboring connectors, allowing them to become misaligned. The repeated reheating fosters change in the solder composition through intermetallic growth and raises the temperature of the melting point. Further, if the connector is made of a wettable material, often solder will climb the connector shaft and ultimately interface with the contact surfaces of the connector. To avoid these difficulties, shims, brackets or shields are first installed to support the nearby connectors or to deflect the hot gas. This procedure extends the time necessary to accomplish the connector removal.

Another disadvantage of the usual connector removal processes is that of leaving varying amounts of solder in the through hole. The residue frequently interferes with optical locating procedures that are required when the through hole wall is to be subsequently drilled away and the hole enlarged for a circuit change. Vacuum solder removal tools, exemplified by that in U.S. patent 3 406 274, and possible reheating are employed to produce the necessary clean holes.

It is accordingly a primary object of this invention to provide desoldering method and apparatus for connectors which closely confines the solder melting heat at the selected location while removing both connector and solder.

A further object of this invention is to provide a process for desoldering a circuit connector or solder column in which a fluid pressure differential is maintained across the column during heating and melting of the solder.

The foregoing objects are attained in accordance with the invention by providing a pair of electrically conductive, hollow members aligned with each other and in contact with opposite ends of a solder column in a through hole in a circuit panel. These two members are supplied with pressurized fluids such that a pressure differential is created along the column. Heating means are provided to melt the solder column allowing the fluid pressure of one member to force the connector and melted solder into the other member as a collector leaving the through hole wall clear of solder. The heating means including means to pass a current through said members and said wall and solder therein to resistively raise the temperature of said solder to its melting point. The hollow members can be heated to conduct heat to the solder column.

The invention further relates to desoldering methods in accordance with the claims 7 and 8.

A significant advantage of the invention is that of selectively removing the desired connector or solder column without detrimental softening of neighboring columns while concentrating energy at the selected column. The fluid stream is further able to remove nearly all solder from the through hole, readily enabling further processing of the panel. The invention eliminates the need for installing shims or brackets thus making connector removal much more efficient. Also eliminated is the need for complicated gripping devices.

The foregoing and other objects, features and advantages of the invention will be apparent from the following more particular description of preferred embodiments of the invention, as illustrated in the accompanying drawing, in which:

Fig. 1 is an elevation view in section of a circuit panel and desoldering apparatus constructed in accordance with the principles of the invention;

Fig. 2 is a sectional view of a modification of the invention in Fig. 1.

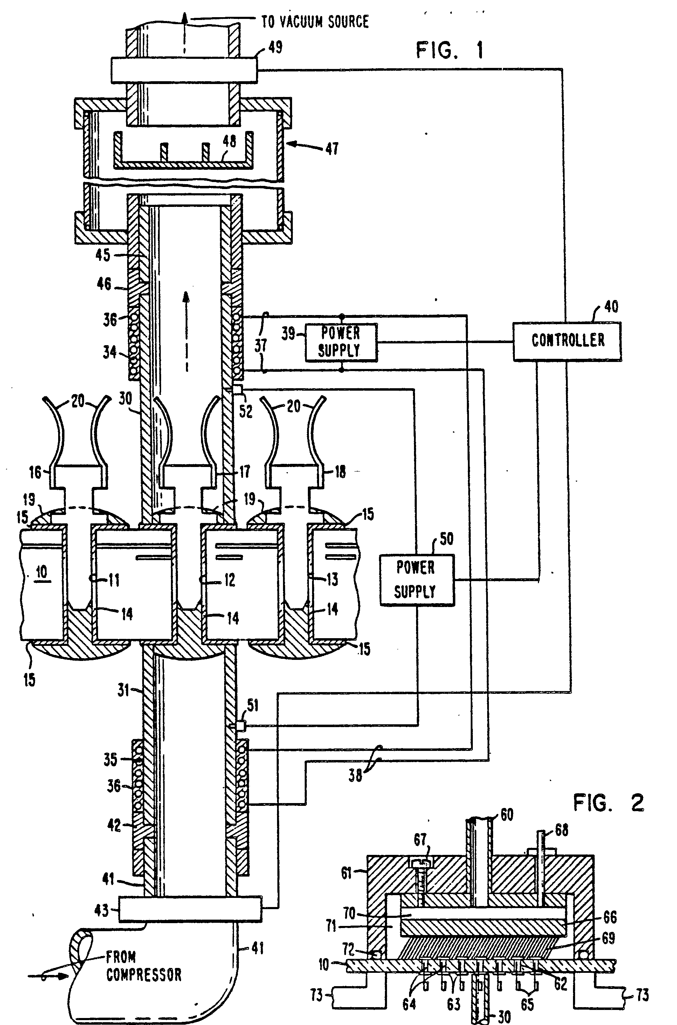

Referring to Fig. 1, a multi-layer circuit panel 10 is shown with through holes 11, 12 and 13, typically having their walls plated with a coating 14 of a metal such as copper having a coating of tin. The tinned copper extends as lands 15 on opposite surfaces of panel 10 at the ends of respective holes 12. Connectors 16, 17 and 18 are secured in their respective through holes by solder 19. The connectors may be any of a variety of devices or pins and are shown here formed with resilient flanges 20 for receiving pins from pluggable modules or components, not shown.

At times, selected ones of connectors 16—18 must be removed because of circuit changes or damage. Desoldering is accomplished by an arrangement in which an evacuated duct 30 and a duct 31 to which pressurized fluid is supplied are placed in alignment at opposite ends of plated through hole 12 having solder column 19. Ducts 30 and 31 are preferably constructed of molybdenum or beryllium copper for good heat and current conduction and non-wetting by the solder. The ducts have outside diameters approximating the diameter of circuit lands 15 and inside diameters that allow the ducts to be slid over flanges 20 of the connectors. Each of ducts 30 and 31 is wound with a respective coil of electrical resistance heating element 34 and 35 embedded in a matrix of insulative ceramic material 36. These two coils are further connected through leads 37 and 38 to power supply 39 energized through controller 40.

Duct 31 is connected to a duct 41 by means of a ceramic, insulative collar 42. Duct 41 connects with solenoid valve 43 operated by means of the controller 40 or a switch. Beyond valve 43 duct 41 is further connected to a source of compressed fluid such as air, inert gas or glycerine at a positive pressure of 68,9 to 413,7 Pa (10 to 60 psi). The fluid is preferably passed through a heater to maintain the fluid near the melting temperature of the solder. Evacuated duct 30 likewise is connected to a duct 45 through a ceramic collar 46 for thermal isolation. Duct 45 is assembled with a debris trap generally indicated as 47 into which molten solder or the connector or other debris are forced after being removed by the fluid pressure. The debris trap may include a baffle 48 or filter material to prevent solder particles from reaching the vacuum source, not shown, to which the debris trap is connected. A solenoid valve 49 serves to selectively connect duct 30 to the source of lower relative pressure such as negative pressure or vacuum.

Both ducts 41 and 45 are preferably of flexible construction or larger diameters for ease of handling. It is contemplated that hollow members or ducts 30 and 31 and their connected assemblies be used as hand tools during the selective removal of a solder column or connector. The assemblies can optionally and preferably be attached to automated precision positioning apparatus, if desired.

Each conductive duct 30 and 31 is further connected via leads to a terminal of power supply 50 by means of screws 51 and 52. Power supply 50 is operated through controller 40 and is turned on when ducts 30 and 31 are in contact with the solder on selected through hole lands to supply a relatively large current in a range of 14 to 40 A.

In operation, ducts 30 and 31 are placed on the surface of the solder meniscus or fillet on the opposite lands 15 of the connector selected for removal. This placement also envelopes the connector. Resistance coils 34 and 35 are energized to preheat ducts 30 and 31 for a brief time to soften the solder surfaces so that the ducts become well seated at the lands or on the solder and lands. Thereafter, the controller 40 energizes the lower resistance circuit of ducts 30, 31 and the solder column via a large current causing the solder column 19 at connector 17 to soften. As the solder heats, solenoid valves 43 and 49 are energized to open the ducts that supply differential fluid pressure along the solder column. When the solder temperature reaches its melting point, the molten solder and the connector are rapidly forced from the through hole leaving a relative solder-free hole wall. Controller 40 then terminates the current through the ducts and hole wall and solenoid valves 43 and 49 are deenergized and closed.

The internal and external diameters of ducts 30, 31 can, of course, be varied to accommodate the various connector or through hole sizes and center-to-center spacing of holes. In certain instances, the connectors may extend beyond the hole land edges while being less than the land diameter in a transverse direction; the ducts can be formed in an oval or rectangular cross section to accommodate the connector and land dimensions. In still other instances, the through holes may not have lands on the circuit panel; the diameters of ducts 30, 31 can then be sized or tapered to insure adequate contact with the hold wall and solder column therein.

A modification of the invention is shown in Fig. 2. In this embodiment hollow member 60 has been enlarged by an attached housing 61 to enclose on circuit board 10 a plurality of through holes 62 having lands 63 and solder columns 64 holding connectors 65. Housing 61 is of insulative material and has a block 66 of conductive metal secured thereto by suitable means such as screws 67. An electrical terminal 68 extends from block 66 through the housing to be connected to a terminal of an electrical supply. Block 66 has a plurality of flexible conductive bristles 69 secured therein having a length sufficient to deflect when housing 61 is placed in contact with the lands and surface of circuit board 10. The bristles may be of a resilient material such as beryllium copper that is both conductive and non-wettable by the solder. Block 66 also has formed therein ducts 70 to allow the internal chamber 71 to be pressurized by the fluid supplied to hollow member 60. Housing 61 is also provided with a seal 72 along its edge adjacent circuit board 10 to prevent leakage of the pressurized fluid.

In use, circuit board 10 is placed on a pair of supports 73 and housing 61 is positioned so as to enclose a plurality of selected through holes 62 having solder columns 64 or connectors 65 therein. When the housing 61 is brought into contact, sealed chamber 71 is formed which can be pressurized through duct 60 with a fluid. Bristles 69 of block 66 contact the circuit lands and exposed solder columns on the surface of the board. A conductive, evacuated, hollow duct such as 30 in Fig. 1 is then selectively brought into contact with the circuit land and the solder column or connector to be removed. Duct 30 and block 66 are then energized to resistively heat the selected solder column between bristles 69 and hollow member 30 to melt the solder column. When the solder becomes molten, the fluid pressure within chamber 71 forces the connector and solder column into hollow member 30. It will be noted from the foregoing that the housing can enclose and contact a plurality of solder columns while the selection is made with the hollow member 30, thus providing the capability of choosing a single solder column or connector to be removed.

## Claims

1. Apparatus for removing solder (19) from a conductively walled through hole (12) in a circuit panel (10), comprising
first and second hollow and electrically conductive members (30, 31) aligned with said through hole and said solder on opposite sides of said panel while in electrical contact with said wall or said solder;
means (40—49) for concurrently applying fluid pressure to said members so as to produce a pressure differential across said through hole; and
means (34—39, 50—52) for heating said solder said heating means including means (50—52) to pass a current through said members and said wall and solder therein to resistively raise the temperature of said solder to its melting point whereby said solder is forced from said through hole.

2. The apparatus of claim 1, wherein said solder (19) holds a connector element (17) extending normal to one side of said circuit panel (10) and one of said hollow members (30) is adapted to surround said connector element when in position.

3. The apparatus of claim 1, wherein said hollow members (30, 31) are each conductively heated by a respective heating coil (34, 35).

4. The apparatus of claim 1, wherein said one hollow member (30) is connected to a debris trap (47) for preventing passage of melted solder.

5. The apparatus of claim 1, wherein one of said hollow members (61) is large enough to enclose a plurality of said through holes (62).

6. The apparatus of claim 5, wherein said one hollow member (61) includes a plurality of electrical elements (69) therein in contact with each of said plurality of through holes (62) for conducting current thereto.

7. A method of removing a solder element (17) and/or a solder column (19) for a conductively walled through hole (12) in a circuit panel (10), comprising the steps of:
aligning a pair of hollow members (30, 31) at opposite ends of and in contact with said column and encompassing said element;
applying fluid pressure in said members so as to create a pressure differential across said column; and
heating said solder column resistively by passing an electrical current through said wall and said solder column (19) via said hollow members (30, 31) until said pressure forces said solder and said element from said through hole.

8. A method of removing a solder column (64) from a conductively walled through hole (62) in a circuit panel (10) comprising the steps of:

contacting the ends of a plurality of solder columns with electrically conductive elements (69) while enclosing said contacted ends in a chamber (71) pressurized by fluid;
contacting the opposite end of a selected one of said enclosed columns with a conductive hollow member (30); and
applying electrical current between said electrically conductive elements and said hollow member to resistively heat said column and melt said solder whereby said fluid pressure forces said solder into said hollow member.

9. The method according to claim 8, wherein said hollow member (30) is evacuated to a fluid pressure below atmospheric pressure.

## Patentansprüche

1. Vorrichtung von Entfernen von Lot (19) aus einem Durchverbindungsloch (12) mit leitenden Wänden in einer Schaltungsplatte (10), enthaltend:
erste und zweite hohle und elektrisch leitende Teile (30, 31), die mit dem Durchverbindungsloch und dem Lot auf entgegengesetzten Seiten der Platte ausgerichtet sind, während sie mit der Wand oder dem Lot in elektrischem Kontakt stehen,
Mittel (40—49) für das gleichzeitige Ausüben von hydraulischem Druck auf die Teile, um einen Druckunterschied über dem Durchverbindungsloch herzustellen, und
Mittel (34—39, 50—52) zum Erhitzen des Lotes, wobei diese Heizmittel weitere Mittel (50—52) umfassen, um durch die Teile sowie die Wand und das darin befindliche Lot einen Strom fliessen zu lassen, um dadurch die Temperatur des Lotes durch Widerstandsheizung auf dessen Schmelzpunkt zu erhöhen, so daß das Lot durch die Öffnung getrieben wird.

2. Vorrichtung nach Anspruch 1, worin das Lötmittel (19) ein Verbindungselement (17) enthält, welches sich normal zu einer Seite der Schaltungsplatte (10) erstreckt, und worin einer der hohlen Teile (30) so ausgelegt ist, daß er das in Position befindliche Verbindungselement umgibt.

3. Vorrichtung nach Anspruch 1, worin die hohlen Teile (30, 31) jeweils leitend mit einer entsprechenden Heizspule (34, 35) erwärmt werden.

4. Vorrichtung nach Anspruch 1, worin der eine hohle Teil (30) mit einer Abfallvorrichtung (47) verbunden ist, um den Durchgang geschmolzenen Lotes zu verhindern.

5. Vorrichtung nach Anspruch 1, worin einer der hohlen Teile (61) groß genug ist, um mehrere der Durchverbindungslöcher (62) zu umfassen.

6. Vorrichtung nach Anspruch 5, worin der eine hohle Teil (61) mehrere elektrische Elemente (69) enthält, welche mit jeder der Durchverbindungslöcher (62) zur Leitung von Strom in Kontakt ist.

7. Verfahren zum Entfernen eines eingelöteten Teils (17) und/oder einer Lotsäule (19) für ein Durchverbindungsloch (12) mit leitenden Wänden in einer Schalttafel (10), folgende Schritte umfassend:

Ausrichten von zwei hohlen Teilen (30, 31) an entgegengesetzten Enden der Säule und in Kontakt mit ihr, und das Element umgebend,

Ausüben von hydraulischem Druck in den Teilen, um einen Druckunterschied längs der Säule zu erzeugen, und

Erwärmen der Lotsäule durch Widerstandsheizung mit einen elektrischen Strom, welcher durch die Wand sowie durch die Lotsäule (19) über die hohlen Teile (30, 31) fließt, bis der Druck das Lot sowie das Element durch das Durchverbindungsloch drückt.

8. Verfahren zum Entfernen einer Lotsäule (64) von einem Durchverbindungsloch (62) mit leitenden Wänden in einer Schalttafel (10), folgende Schritte umfassend:

Kontaktieren der Enden mehrerer Lotsäulen mit elektrisch leitenden Elementen (69) und gleichzeitiges Umfassen der kontaktieren Enden in einer hydraulischem Druck ausgesetzten Kammer (71),

Kontaktieren des entgegengesetzten Endes einer ausgewählten Säule mit einem leitenden hohlen Teil (30), und

Anlegen von elektrischem Strom zwischen den elektrisch leitenden Elementen und dem hohlen Teil, um die Säule durch Widerstandsheizung zu erhitzen und das Lot zum Schmelzen zu bringen, so daß der hydraulische Druck das Lot in den hohlen Teil drückt.

9. Verfahren nach Anspruch 8, worin der hohle Teil (30) auf einen unterhalb des atmospärischen Druckes liegenden hydraulischen Druck evakuiert wird.

**Revendications**

1. Appareil pour retirer une soudure (19) d'un trou traversant (13) à paroi conductrice sur un panneau (10) de circuits, comprenant

un premier et un deuxième organes (30, 31) creux et électroconducteurs alignés avec ledit trou traversant et ladite soudure sur les côtés opposés dudit panneau tout en étant en contact électrique avec ladite paroi ou ladite soudure;

des moyens (40—49) pour appliquer simultanément une pression de fluide auxdits organes afin de créer une pression différentielle à travers ledit trou traversant; et

des moyens (34—39, 50—52) pour chauffer ladite soudure, lesdits moyens de chauffage comportant un moyen (50—52) pour faire passer un courant à travers lesdits organes et sur ladite paroi et dans la soudure qui s'y trouve pour élever par effet Joule la température de ladite soudure jusqu'à son point de fusion, grâce à quoi ladite soudure est chassée hors dudit trou traversant.

2. Appareil selon la revendication 1, dans lequel ladite soudure (19) maintient en place un élément connecteur (17) s'étendant perpendiculairement à un côté dudit panneau (10) de circuits et un desdits organes creux (30) est conçu pour entourer l'élément connecteur une fois qu'il est en place.

3. Appareil selon la revendication 1, dans lequel lesdits organes creux (30, 31) sont chacun chauffés par conduction à l'aide d'un enroulement de chauffage correspondant (34, 35).

4. Appareil selon la revendication 1, dans lequel ledit premier organe creux (30) est relié à un piège (47) à débris pour empêcher le passage de soudure fondue.

5. Appareil selon la revendication 1, dans lequel un desdits organes creux (61) est suffisamment grand pour englober une multiplicité desdits trous débouchants (62).

6. Appareil selon la revendication 5, dans lequel ledit organe creux (61) contient une multiplicité d'éléments électriques (69) en contact avec chaque trou de ladite multiplicité de trous traversants (62) pour conduire le courant jusqu'à ceux-ci.

7. Procédé pour retirer un élément (17) de soudure et/ou une colonne (19) de soudure pour un trou traversant (12) à parois conductrice dans un panneau (10 de circuits, comprenant les opérations suivantes:

alignement de deux organes creux (30, 31) aux extrémités opposées de ladite colonne et au contact de celle-ci et englobant ledit élément de soudure;

application d'une pression de fluide dans lesdits organes de façon à créer une pression différentielle dans ladite colonne; et

chauffage de ladite colonne de soudure par effet Joule en faisant passer un courant électrique par ladite paroi et ladite colonne (19) de soudure via lesdits organes creux (30, 31) jusqu'à ce que ladite pression chasse ladite soudure et ledit élément de soudure hors dudit trou traversant.

8. Procédé pour retirer une colonne (64) de soudure d'un trou traversant (62) à paroi conductrice dans un panneau (10) de circuits, comprenant les opérations suivantes:

mise en contact des extrémités de plusieurs colonnes de soudure avec des éléments électroconducteurs (69) tout en enfermant dans une chambre (71), mise sous pression par un fluide, lesdites extrémités mises en contact;

mise en contact de l'extrémité opposée d'une colonne choisie parmi lesdites colonnes enfermées avec un organe creux conducteur (30); et

application d'un courant électrique entre lesdits éléments électroconducteurs et ledit organe creux pour chauffer par effet Joule ladite colonne et faire fondre ladite soudure, grâce à quoi ladite pression de fluide fait entrer de force ladite soudure dans ledit organe creux.

9. Procédé selon la revendication 8, dans lequel ledit organe creux (30) est évacué jusqu'à une pression de fluide inférieure à la pression atmosphérique.

0 112 468

FIG. 1

TO VACUUM SOURCE

POWER SUPPLY

CONTROLLER

POWER SUPPLY

FROM COMPRESSOR

FIG. 2